# EUROPEAN PATENT APPLICATION

(11) **EP 4 822 557 A1**
(43) Date of publication of application: **14.10.2026**
(21) Application number: 25305530.5
(22) Date of filing: 11.04.2025
(51) Int. Cl.: G06F 16/75, G06F 16/783, G06N 3/00

(54) **TRAINING METHOD FOR AN ANOMALY DETECTION MODEL**

(71) Applicant: TOYOTA JIDOSHA KABUSHIKI KAISHA, Toyota-shi, Aichi-ken, 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); MAJHI, Snehashis, 06902 VALBONNE (FR); BREMOND, Francois, 06902 VALBONNE (FR); D'AMICANTONIO, Giacomo, 06902 VALBONNE (FR); KONG, Quan, CHUO-KU, TOKYO, 103-0022 (JP)
(74) Representative: Cabinet Beau de Loménie

(57) **Abstract**

A computer-implemented training method for a machine learning model configured to detect anomalies in a signal having a succession of elements over a temporal dimension, the method comprising:
- predicting an element-wise anomaly score (10) for a training signal by using the machine learning model;
- modelling peaks of the element-wise anomaly score over the temporal dimension by one or more probability distributions (18);
- generating a pseudo-ground-truth element-wise anomaly score of the training signal based on the one or more probability distributions (18);
- updating the machine learning model based on a difference between the predicted element-wise anomaly score (10) and the pseudo-ground-truth element-wise anomaly score.

## Description

### BACKGROUND OF THE INVENTION

### 1. Field of the invention

The present disclosure relates to the field of anomaly detection and machine learning, and particularly to a method for training a machine learning model to detect anomalies in a signal. The training method may find applications in all kinds of industries, including the automotive industry. For instance, the training method may be used in the context of computer vision and/or safety-critical applications to train a machine learning model understand a vehicle's environment in order to adequately control the vehicle, to monitor and support human activities in places such as a factory, or to support human or automated activities in the context of smart cities.

### 2. Description of Related Art

Anomaly detection (AD), namely identifying instances or components thereof that are irregular or significantly deviate from the normality, is an actively studied problem in several fields. For instance, in conventional vision AD benchmarks, 'irregularities' are typically caused by either high-level (or semantic) variations such as presence of objects from unseen categories, defects on objects such as scratches or dents, low-level variations in color, shape, size, or pixel-level noise. In videos, anomalies may correspond to an unusual or abnormal event taking place in an otherwise regular scene. Besides computer vision, anomaly detection is also crucial with other types of signals such as sensor data, e.g. collected during a manufacturing process or during operation of an apparatus.

However, anomalies may take various forms. While recent methods can reliably detect strong anomalies, they still struggle to capture subtle anomalies. In particular, in the task of anomaly localization in a temporal signal, these methods generally fail to correctly detect the temporal window in which subtle anomalies happen.

The following references give further background information about machine learning and anomaly detection:
[REF. 1] David Eigen, Marc' Aurelio Ranzato, and Ilya Sutskever. Learning factored representations in a deep mixture of experts. arXiv preprint arXiv:1312.4314, 2013.
[REF. 2] Hang Zhou, Junqing Yu, and Wei Yang. Dual memory units with uncertainty regulation for weakly supervised video anomaly detection. arXiv preprint arXiv:2302.05160, 2023.
[REF. 3] Joao Carreira and Andrew Zisserman. Quo vadis, action recognition? A new model and the kinetics dataset. CoRR, abs/1705.07750, 2017. URL http://arxiv.org/abs/1705.07750.
[REF. 4] Hang Zhou, Junqing Yu, and Wei Yang. Dual memory units with uncertainty regulation for weakly supervised video anomaly detection. In Proceedings of the AAAI Conference on Artificial Intelligence, volume 37, pp. 3769-3777, 2023.
[REF. 5] Dan Hendrycks and Kevin Gimpel. Bridging nonlinearities and stochastic regularizers with gaussian error linear units. CoRR, abs/1606.08415, 2016. URL http://arxiv.org/abs/1606.08415.
[REF. 6] Ilya Loshchilov and Frank Hutter. Fixing weight decay regularization in adam. CoRR, abs/1711.05101, 2017. URL http://arxiv.org/abs/1711.05101.
[REF. 7] Waqas Sultani, Chen Chen, and Mubarak Shah. Real-world anomaly detection in surveillance videos. In Proceedings of the IEEE conference on computer vision and pattern recognition, pp. 6479-6488, 2018b.

### SUMMARY

The object of the present invention is to at least substantially remedy the above-mentioned drawbacks.

In this respect, the present disclosure relates to a computer-implemented training method for a machine learning model configured to detect anomalies in a signal having a succession of elements over a temporal dimension, the method comprising:
- predicting an element-wise anomaly score for a training signal by using the machine learning model;
- modelling peaks of the element-wise anomaly score over the temporal dimension by one or more probability distributions;
- generating a pseudo-ground-truth element-wise anomaly score of the training signal based on the one or more probability distributions;
- updating the machine learning model based on a difference between the predicted element-wise anomaly score and the pseudo-ground-truth element-wise anomaly score.

For the sake of conciseness, this method will be referred to as the training method hereinafter. In the context of the present disclosure, "training" includes training a machine learning model that has just been initialized but also fine-tuning a previously trained machine learning model.

The signal in which an anomaly is to be detected has a succession of elements over a temporal dimension. In other words, the signal is a temporal signal. The elements may correspond to individual values of the signal, especially if the signal is discrete or discretized, or to temporal sub-ranges of the signal if the signal is discrete or continuous, each sub-range containing one or more values of the signal. The machine learning model is configured to detect anomalies in that signal, namely not only to identify whether the signal as a whole comprises an anomaly but also to detect which part of the signal comprises that anomaly. The signal may be pre-processed (e.g. encoded) to enable the predicting step.

The training method uses a training signal, which should be of the same nature as the signal on which the machine learning model will be used during inference.

The training method may be weakly supervised, e.g. the training signal may be annotated as a whole (e.g. as normal or abnormal, namely containing or not an anomaly) without each element thereof having its own annotation.

The machine learning model is configured to predict an anomaly score for a plurality of elements of the signal, desirably most elements or even each element of the signal. Thus, the machine learning model can predict the element-wise anomaly score for the training signal. However, using that score alone for training may result in a training process that over-relies on the most abnormal elements of the training signal, ignoring more subtle anomalies.

Thus, the present training method further comprises modelling peaks of the element-wise anomaly score over the temporal dimension by one or more probability distributions. Since the elements have a timestamp and an anomaly score, the anomaly score over the temporal dimension may be represented as a 2D chart, on the basis of which peaks can be detected. A peak corresponds to a local extremum and is likely to indicate an anomaly. Peak detection is known per se in the art. The peak detection may be tuned to detect only the most salient peaks, with a tolerance defined by the skilled person as per their needs.

The one or more detected peaks can be modelled by one or more probability distributions (e.g. one distribution per peak or one distribution covering a plurality of the peaks), and a pseudo-ground-truth element-wise anomaly score is generated based on the probability distributions. The probability distributions enable to consider not only top-scoring elements but also their temporal context, which leads the machine learning model to learn a more complete representation of anomalies, especially subtle anomalies.

A machine learning model may comprise one or more mathematical expressions configured to process the signal (or training signal) in order to output information representative of the anomalies in the signal, such as an anomaly score or anomaly localization. Weights and/or biases of the machine learning model may be iteratively updated by the training method.

Thus, as the training per se, the machine learning model is updated based on a difference between the predicted element-wise anomaly score and the pseudo-ground-truth element-wise anomaly score. That is, the machine learning model is updated to push its predictions towards the pseudo-ground-truth element-wise anomaly scores. The difference between the predicted element-wise anomaly score and the pseudo-ground-truth element-wise anomaly score characterizes how much the predicted score and the pseudo-ground-truth differ from each other. This difference may be determined based on a suitable metric or comparison.

Thanks to the proposed training method, the machine learning model leverages temporal context around possible anomalies and learns a more comprehensive and complete representation of anomalies. Therefore, the machine learning model trained in this way can better detect anomalies, even if the training is weakly supervised.

Optionally, the machine learning model comprises a feature extractor configured to process the signal before predicting the element-wise anomaly score. The feature extractor may take the signal (or training signal) as an input and output a representation thereof in a latent space. The feature extractor may be generic and task-agnostic and may not be dedicated to anomaly detection. The feature extractor may be frozen during the training method, i.e. may be left unchanged during the training method. This enables to use off-the-shelf and pre-trained feature extractors.

Optionally, the machine learning model comprises a task encoder configured to process the signal before predicting the element-wise anomaly score. As an input, the task encoder may take the signal (or training signal), or may take the representation thereof output by the above-mentioned feature extractor. The task encoder may be specific to anomaly detection and may transform the signal or its representation into a space that is more suitable for anomaly detection. The task encoder may be frozen during the training method, i.e. may be left unchanged during the training method. This enables to use off-the-shelf and pre-trained task encoders.

Optionally, the one or more probability distributions comprise respective probability distributions associated with respective one of the peaks. That is, one peak may be modelled by one probability distribution. This facilitates the modelling and enables to use simple probability distributions, which makes the training method easier to implement and more robust.

Optionally, each of the respective probability distributions is sized in consideration of the associated peak. Thus, although the different probability distributions may follow the same type of distribution, they may be sized differently depending on the peaks they are associated with. The sizing may include the variance of the probability distribution. Thus, the modelling is made more flexible and can incorporate more information from the element-wise anomaly score over the temporal dimension.

Optionally, the one or more probability distributions are one or more Gaussian probability distributions.

Optionally, the machine learning model comprises a plurality of expert models. An expert model is a machine learning model that specializes in solving a portion of a problem. A plurality of expert models can be used to solve the problem as a whole, each portion being dedicated to one of the expert models. The outputs of the expert models may be combined by a so-called mixture of experts, e.g. where the final output is a weighted sum of the outputs of the respective expert models. Mixture of experts is known per se in the art [REF. 1].

Each of the expert models may be configured to predict an element-wise anomaly score, the overall element-wise anomaly score being a combination of the expert models' scores. Sharing the anomaly detection task between multiple expert models increases the possibility of correctly encoding the singular characteristics of different anomalies. For instance, each expert model may specialize in detecting one type of anomaly. In this way, strong anomalies and subtle anomalies may be detected by different expert models, and subtle anomalies may not be hidden by cues of stronger anomalies. Therefore, the machine learning model can better detect different types of anomalies. In other words, the mixture-of-experts architecture is capable of capturing class-specific representations, leading to substantial performance gains, especially on complex anomalies.

Optionally, the machine learning model comprises a gate model configured to predict the element-wise anomaly score based on respective scores output by the plurality of expert models. Beyond a mere weighted sum as mentioned above, the gate model may leverage similarities and diversities between the expert models. The gate model may be separated from the expert models. The gate model may be updated during the training method to learn a more expressive representation of the latent space of the anomaly detection task.

Optionally, the gate model is configured to establish a correspondence between the respective scores and a representation of the signal. Thus, the gate model may receive the signal (or the training signal) or a representation thereof as an input to guide the combination of the respective scores output by the plurality of expert models. Thanks to that correspondence, the mixture of experts is carried out more accurately.

Optionally, the training signal is labeled with an anomaly class and the updating updates at least one of the expert models that is associated with said anomaly class. An anomaly class is a class that is specific to one type of anomalies. The training signal being labeled with an anomaly class, i.e. having the label of a specific type of anomalies, enables to carry out the training method in a weakly-supervised way: the training signal is associated with a type of anomalies but the location and duration of the anomaly within the training signal may not be known. Advantageously, the updating updates at least one of the expert models that is associated with said anomaly class. Therefore, the expert models can be specifically trained on the anomalies which they are dedicated to.

Optionally, as mentioned before, the updating updates the gate model.

Optionally, the updating is further based on a top-k loss term taking into account the k most anomalous elements according to the predicted element-wise anomaly score. Number k may be an integer between 1 and the number of elements in the succession. The most anomalous elements are the elements that have the greatest (or lowest, depending on convention) anomaly score. The top-k loss term may penalize the incorrect determination of the anomaly score. For computation of the top-k loss term, element-wise ground truth may be determined by point selection.

Optionally, the signal comprises a plurality of images, a video, a sound, an electrical signal or a combination thereof. The signal may be acquired by a sensor such as a camera, a microphone, electrodes or the like. Alternatively, the signal may be transferred from a storage medium after being acquired per se.

Optionally, the training method further comprises an initial training stage in which the machine learning model is updated based on another criterion than the difference between the predicted element-wise anomaly score and the pseudo-ground-truth element-wise anomaly score. This initial training stage brings stability at early stages of the training, where the machine learning model is not good enough to produce a meaningful element-wise anomaly score that enables the above-mentioned difference to be taken into account. The other criterion may comprise or consist in the above-mentioned top-k loss term.

During the initial training stage, as the above-mentioned difference is not taken into account, the preparatory steps such as the above-mentioned modelling and generating may be omitted as well.

The present disclosure is further directed to a method for detecting anomalies in a signal having a succession of elements over a temporal dimension, the method comprising using a machine learning model trained by the above-mentioned training method according to any of the embodiments disclosed herein. The machine learning model may be used to detect anomalies in one or more temporal signals.

The present disclosure is further directed to a system for detecting anomalies in a signal having a succession of elements over a temporal dimension, the system comprising a machine learning model trained by the above-mentioned training method according to any of the embodiments disclosed herein. The system may include a processor configured to carry out the recited functions. In embodiments, the system may have the hardware structure of a computer.

The present disclosure is further related to a computer program set including instructions for executing the steps of the above-described training method or detection method when said program is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above-described training method or detection method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as ROM, CD-ROM, EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 comprises two charts illustrating the determination of anomalies based on the proposed training method and based on a baseline;
- FIG. 2 is a block-diagram illustrating the architecture of a machine learning model according to an embodiment.

### DETAILED DESCRIPTION OF EMBODIMENTS

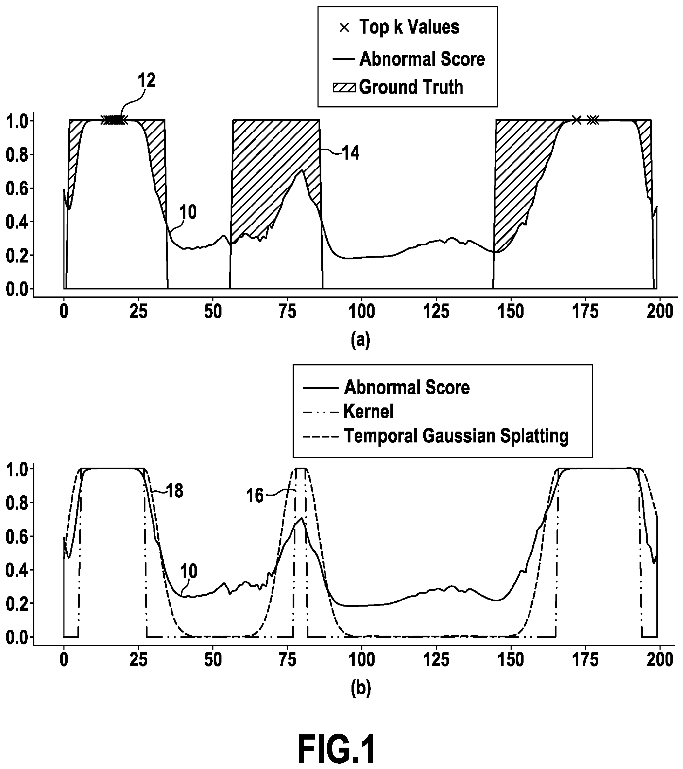

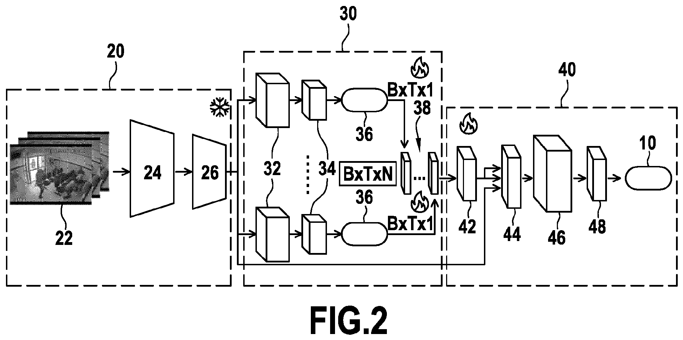

A training method according to an embodiment is described with reference to Figs. 1 and 2. Hereinafter, an embodiment of the training method focuses on an application to detecting anomalous events in a video, i.e. detecting anomalies in a signal wherein the signal is a video (a succession of frames over a temporal dimension). Snippets are subsets of the video that include one or more frames. However, the principles explained herein can be generalized by the skilled person to other signals than videos, e.g. by changing the feature extractor described below. For example, the signal may comprise a plurality of images, a video, a sound, an electrical signal or a combination thereof.

The proposed detection method aims to accurately detect complex anomalies using weakly-labeled training videos, namely videos having a single label (anomaly type #1, anomaly type #2, ..., anomaly type #p, no anomaly), whereas the detection method is configured to detect which frames of the videos contain which type of anomaly.

In previous works, so-called Multi-Instance Learning (MIL) creates bags containing positive and negative signals (e.g., normal and abnormal videos), labeled only at the video-level. During training, a machine learning model (simply referred to as the model) assigns a score between 0 and 1 to each snippet, with e.g. 0 indicating a normal snippet and 1 indicating an abnormal snippet. In other words, the machine learning model predicts an element-wise anomaly score for the input video. Such a score may be determined by a machine learning model known per se in the art, e.g. [REF. 4], [REF. 7].

During training under the MIL approach, the highest-scoring samples in the normal bag are guided towards 0, allowing the model to learn most normal scenarios correctly. On the other hand, the highest-scoring negative samples are pushed towards 1. This leads the model to be supervised, and therefore learn few and specific instances of anomalous events, ignoring useful information contained in neighboring snippets. Over time, this approach has proved to be powerful but insufficient to train a model to correctly capture the secondary and specific attributes of different anomalous classes.

Specifically, the MIL paradigm determines the most abnormal snippets (topₖ abnormal scores) according to Eq. (1) and minimizes a loss L function according to Eq. (2) following the above-described principles. ${top}_{k} = {argmax}_{\left|K\right| = k} {\sum }_{i ∈ K} {score}_{i}^{-} , ∀ i ∈ \left[1, T\right]$ (1) $L = {L}_{topk - norm} + {L}_{topk - abn}$ (2)
where ${score}_{i}^{-}$ is the score of a snippet of the abnormal video *S*⁻, T is the number of snippets (or frames) in the video, and *k* is the number of most abnormal snippets sought.

Figure 1(a) is a chart illustrating, after training following the MIL paradigm, an element-wise anomaly score 10 (abnormal score) output by the machine learning model as a function of the snippet for an exemplary input video. The top-k (k most abnormal) values are indicated at reference 12 and the ground truth anomalies are hatched (reference 14). As can be seen in Fig. 1(a), the *topₖ* snippets used in the MIL paradigm lead the model to focus on the first and last of the three anomalous events present in the video, overlooking the second anomaly. This overreliance on the most anomalous snippets prevents the model from accurately detecting complex anomalies.

However, the inventors have noticed that the second anomaly, while not scoring as high as the others, is still somehow detected: the model is not as confident about the snippets belonging to the second anomaly as about the first and third anomalies, due to the fact that during training, it has never been supervised specifically on them, but the models assigns them an anomalous score higher than the normal snippets of the video. Additionally, the snippets between anomalies are still considered partially anomalous. The inventors found that it was possible to leverage those situations to generate pseudo-labels that allow a model to be trained on more information, while remaining in the data-annotation boundaries of the weakly-supervised video anomaly detection paradigm.

To this end, the present disclosure introduces a computer-implemented training method for a machine learning model configured to detect anomalies in a signal having a succession of elements over a temporal dimension (e.g. a video), the method comprising predicting an element-wise anomaly score for a training signal by using the machine learning model. The element-wise anomaly score may be predicted in the same manner as described above.

However, instead of directly using the top-k element-wise anomaly scores as per Eq. (2), the proposed training method models peaks of the element-wise anomaly score 10 over the temporal dimension by one or more probability distributions. Without loss of generality, the following description will assume that the one or more probability distributions are Gaussian probability distribution, for conciseness and legibility. Naturally, other types of probability distributions may be used.

For instance, to model the peaks, Temporal Gaussian Splatting (TSG) may be used, as illustrated in Fig. 1(b). Gaussian kernels 16 may be extracted in correspondence with the peaks in the temporal axis of the element-wise anomaly score 10 predicted by the model. This allows to identify subtle anomalies that are usually not included in the top-k snippets described in Equation (2). The kernels 16 obtained from the detected peaks may then rendered over the length of anomalous videos to obtain a more accurate representation 18 of the anomalies along the temporal dimension. Such a method enables to obtain respective probability distributions associated with respective ones of the peaks. The rendering may be such that each of the respective probability distributions is sized in consideration of the associated peak, e.g. the temporal width of the peak is taken into account in determining the temporal width of the probability distribution 18.

Specifically, considering the abnormal scores estimated for each snippet of a video as a signal over the duration of the video *T,* the peaks *P*₁, ..., *Pₙ* are detected and their respective widths *W*₁, *..., Wₙ* are determined. The set of peaks *P* contains the position of the snippet with the highest abnormal score for each peak in the video. This may lead to the detection of spurious peaks, meaning peaks in the abnormal scores of a video that do not belong to an anomalous event. To mitigate this, the model may be trained for a few iterations with the *Lₜₒₚₖ₋ₙₒᵣₘ* component of the MIL training objective (Eq. (2)). In other words, the training method may comprise an initial training stage in which the machine learning model is updated based on another criterion than the difference between the predicted element-wise anomaly score and the pseudo-ground-truth element-wise anomaly score, that other criterion being e.g. based on the top-k most anomalous snippets, e.g. based on the *Lₜₒₚₖ₋ₙₒᵣₘ* component of Eq. (2).

Gaussian kernels *Gᵢ* (shown at 16 in Fig. (b)) may then be initialized with a unitary value for the snippets corresponding to each peak *Pᵢ* detected in the abnormal scores of the video. To further represent the duration of the anomaly, the kernel values corresponding to snippets that are within the width *Wᵢ* of the respective peak may also be set to 1 if their abnormal score is higher than the difference between the peak score and the standard deviation of the normal distribution centered in the peak: ${G}_{i , t} = \left\{\begin{matrix}1 , & if t = {P}_{i} \\ 1 , & if {score}_{t} \geq {score}_{{P}_{i}} - {σ}_{i} ∧ t ∈ {W}_{i} , ∀ t ∈ \left[1, T\right] \\ 0 , & otherwise\end{matrix}\right.$ (3)
where *scoreₜ* is the abnormal score assigned to snippet *t* and *σᵢ* is the standard deviation of the normal distribution centered in peak *i*. This allows to treat each anomaly separately, which is beneficial for the anomaly detection task due to the fact that different anomalies have different characteristics along the temporal dimension. Modelling the peaks by one or more probability distributions represents an improvement upon the top-k formulation, allowing the model to learn from the entirety of an anomalous event instead of its most abnormal snippets.

Each kernel 16 may be splatted, e.g. via: ${f}_{i} \left(t\right) = {G}_{i , t} ⋅ exp \left(-\frac{{\left‖t-{P}_{i}\right‖}^{2}}{2 {σ}_{i}^{2}}\right) , ∀ t ∈ \left[1, T\right]$ (4)
where *T* is the length of the video and *σᵢ* is the standard deviation of the scores around the peak centered in *Pᵢ* within the width *Wᵢ*. As mentioned above, while Eq. (4) characterizes a Gaussian probability distribution, other types of probability distributions may be used.

The training method further comprises generating a pseudo-ground-truth element-wise anomaly score of the training signal based on the one or more probability distributions. That is, pseudo-labels *ŷ* are generated based on the determined probability distributions, e.g., in the above case, by rendering each of the *K* extracted kernels 16 over the length of the video: $\hat{y} \left(t\right) = \left‖{\sum }_{i = 1}^{k} {f}_{i} \left(t\right)\right‖$ (5)

As shown in Fig. 1(b), the pseudo-labels generated based on the probability distributions 18 contain a target abnormal score between 0 and 1 for each snippet in the video, allowing the model to learn the severity of each abnormal snippet. This represents a relevant improvement over the standard MIL training objective, where only the top-k snippets are pushed towards 1 in the training objective, as in Equation (2).

Then, the machine learning model can be updated based on a difference between the predicted element-wise anomaly score 10 (also referred to as *y*) and the pseudo-ground-truth element-wise anomaly score *ŷ*(*t*). The skilled person may choose any suitable loss function to take this difference into account, e.g. binary cross-entropy (BCE), KL divergence or an L2 distance loss, which are known per se in the art. In practice, for stability reasons, it is proposed herein that the updating be further based on a top-k loss term taking into account the k most anomalous elements according to the predicted element-wise anomaly score *y*. Accordingly, the following loss function *L_{TGS}* may be used (here a mere sum of two terms, but any weighted sum may be used instead, and the loss function may comprise further terms as desired): ${L}_{TGS} = {L}_{topk - norm} + BCE \left(y, \hat{y}\right)$ (5)

While the above-described training method may be used to more accurately train any machine learning model that basically predicts element-wise anomaly scores, an improved machine learning model architecture is now described with reference to Fig. 2. As shown in Fig. 2, the proposed machine learning model may be divided into three successive main blocks 20, 30, 40.

Overall, the machine learning model is configured to detect anomalies in an input video 22 by predicting an element-wise anomaly score 10 for each snippet of video 22.

Block 20 relates to extracting features of video 22. That is, the video may be encoded into a suitable representation for further processing. As mentioned above, the machine learning model may comprise a feature extractor 24 configured to process video 22 (or more generally an input signal) before predicting the element-wise anomaly score, and/or a task encoder 26 configured to process video 22 (or more generally the input signal) before predicting the element-wise anomaly score. The task encoder 26 may process the output from the feature extractor 24. The feature extractor 24 may be agnostic to the task of anomaly detection, while the task encoder 26 may be a task-aware encoder. The feature extractor 24 may capture basic video dynamics; however, these features lack the specificity needed for detecting intricate spatial and temporal anomalies. Thus, the task encoder 26 adds as a task-aware encoding to provide a representation tailored to anomaly detection. The feature extractor 24 and/or the task encoder 26 may form the backbone of feature extraction within the machine learning model.

For instance, as the feature extractor 24, the I3D model may be used [REF. 3]. In an implementation example, the I3D model may be pre-trained on Kinetics-400 with sliding windows of 16 frames. The I3D implementation chosen is the ResNet50, which is one of the best-performing.

For instance, as the task encoder 26, the UR-DMU model may be used [REF. 4]. It is desired that the task encoder 26 extracts highly informative features by leveraging temporal consistency. The task encoder 26 may be pre-trained as described above using Eq. (5), optionally following an initial training stage as described later.

As shown in block 30, the machine learning model may comprise a plurality of expert models. Specifically, to overcome the limitations of coarse anomaly detection, N expert models, each dedicated to identifying specific types of anomalies, may be optimized with the proposed loss (Eq. (5)). This design introduces a level of specialization, allowing the framework to capture the unique attributes of individual anomaly classes. Each expert model may be composed of: (a) a transformer block 32 with e.g. four self-attention heads, (b) a multi-layer perceptron (MLP) 34 with e.g. two layers and GELU activation [REF. 5], which maps the extracted features to an anomaly score 36 for its respective class(es) (also referred to as the "expert score"). As the case may be, these expert models leverage the enriched task-aware features, expanding the boundaries of the latent anomaly space. The expert scores may be concatenated at 38 before passing on to the following block 40.

These fine-grained, specialized expert models enable the model to better detect subtle or complex anomalies that may blend seamlessly with normal events.

Block 40 may correspond to a gate model (hence referred to as the gate model 40 hereinafter) configured to predict the element-wise anomaly score 10 based on the respective scores 36 output by the plurality of expert models. The gate model 40 acts as collaborative integration mechanism to ensure that the individual strengths of the expert models are harnessed to create a unified representation capable of robust anomaly detection. The gate model 40 may comprise any of three components:

(a) Score Refinement: the concatenated expert scores 38 are projected into a higher-dimensional space enriching the representation of class-specific anomaly logits. This projection, e.g. through a linear layer 42, enables the gate model 40 to handle the intricate variations across anomaly classes effectively.

(b) Bi-Directional Cross-Attention Module 44: to bridge the gap between fine-grained class-specific logits and coarse abnormal logits from the task encoder 26, the gate model incorporates a bi-directional cross-attention module 44. The bi-directional cross-attention module 44 learns the correlations and contrasts between the expert scores 38 and the coarse anomaly-aware features, allowing the gate model 40 to leverage detailed, class-specific insights as well as the more general anomaly-aware features. More generally, the gate model 40 may directly receive a representation of the video 22 (e.g. the output of the task encoder 26 through a residual connection). The gate model 40 may be configured to establish a correspondence between the respective expert scores 36 (or their concatenated version 38) and a representation of the video 22 (e.g. the output of the task encoder 26).

(c) Final Prediction: a final element-wise anomaly score 10 is produced by the gate model 40. To this end, the refined and integrated features may be processed through a transformer block 46 followed by an MLP 48, e.g. similar to the architecture of the expert models. This ensures that the latent space representation is expressive and well-suited for capturing diverse anomaly patterns.

In the architecture shown in Fig. 2, the feature extractor 24 and/or the task encoder 26 may be frozen (optionally after a pre-training as described above), i.e. not affected by the training method. On the other hand, blocks 30 and/or 40, namely the expert models and/or the gate model 40, are updated by the training method. For instance, if the training video is labeled with an anomaly class, the updating of the training method updates at least one of the expert models that is associated with said anomaly class. In this way, each of the expert models may be trained to identify a specific type (class) of anomalies. In practice, each expert model may be pre-trained separately using samples of that specific type. In a subsequent training phase, the expert models are trained together as per the above-described architecture. In this subsequent phase, for an input sample from a given class, the expert model trained on that class will return a meaningful score whereas the other expert models, not trained on that class, will return meaningless scores which seem randomly distributed. When considering all scores, the expert model trained on that class will play a major role in the prediction whereas the other expert models will not play any significant role.

Instead of associating (and training) each expert model to a single anomaly class, anomalies may be clustered and an expert model may be trained to span multiple anomaly classes. While this reduces complexity, this also negatively affects the proper detection of anomalies. Therefore, such clustering may be useful to reach a different performance/resources trade-off. This approach may be helpful in real-world scenarios where the number and exact types of anomalies are not fixed.

In an implementation example, in relation to the feature encoder 24, the transformer blocks implemented in the expert models and the gate model may not have positional embeddings and class tokens.

Experiments have been conducted by the inventors to assess the performance of a method for detecting anomalies in a signal having a succession of elements over a temporal dimension, the method comprising using a machine learning model trained by the above-described training method. Specifically, the machine learning model may be trained by the proposed training method to detect anomalies in videos in a weakly supervised setup in which training videos are annotated with only video-level labels, without access to frame-level annotations. The training method may be carried out using the AdamW optimizer [REF. 6]. The batch size may be set at 128, containing 64 normal and 64 abnormal videos. For training stability, as mentioned before, an initial training stage (e.g. corresponding to the first epoch) may be provided, during which the models are trained with the *Lₙₒᵣₘ* component of Eq. (5). For the same purposes, the same smoothness and sparsity loss components as presented in [REF. 7] may be used.

These experiments have shown that a machine learning model trained by the proposed training method to detect anomalies in videos outperforms prior state-of-the-art models across multiple metrics. The results show an enhanced ability to detect complex video anomalies even in real-world datasets.

Although a significant increase in performance is obtained by combining the temporal gaussian splatting with the mixture-of-experts architecture, further investigation has shown that an improvement was already obtained by the proposed training method even without multiple expert models and gate model. In this case, the feature extractor 24 and/or task encoder 26 may be trained by the proposed training method, as mentioned above.

Although the present disclosure refers to specific exemplary embodiments, modifications may be provided to these examples without departing from the general scope of the invention as defined by the claims. For instance, while transformer blocks 32, 46 have been described, other temporal processing may be used, such as Long Short Term Memory. Besides, other feature extractors or task encoders than those described above may be used. More generally, individual characteristics of the different illustrated/mentioned embodiments may be combined in additional embodiments. Therefore, the description and the drawings should be considered in an illustrative rather than in a restrictive sense.

## Claims

1. A computer-implemented training method for a machine learning model configured to detect anomalies in a signal (22) having a succession of elements over a temporal dimension, the method comprising:
- predicting an element-wise anomaly score (10) for a training signal by using the machine learning model;
- modelling peaks of the element-wise anomaly score over the temporal dimension by one or more probability distributions (18);
- generating a pseudo-ground-truth element-wise anomaly score of the training signal based on the one or more probability distributions (18);
- updating the machine learning model based on a difference between the predicted element-wise anomaly score (10) and the pseudo-ground-truth element-wise anomaly score.

2. The training method of claim 1, wherein the machine learning model comprises a feature extractor (24) configured to process the signal (22) before predicting the element-wise anomaly score (10).

3. The training method of claim 1 or 2, wherein the machine learning model comprises a task encoder (26) configured to process the signal (22) before predicting the element-wise anomaly score (10).

4. The training method of any of claims 1 to 3, wherein the one or more probability distributions (18) comprise respective probability distributions associated with respective one of the peaks, optionally wherein each of the respective probability distributions is sized in consideration of the associated peak.

5. The training method of any of claims 1 to 4, wherein the one or more probability distributions (18) are one or more Gaussian probability distributions.

6. The training method of any of claims 1 to 5, wherein the machine learning model comprises a plurality of expert models.

7. The training method of claim 6, wherein the machine learning model comprises a gate model (40) configured to predict the element-wise anomaly score (10) based on respective scores output by the plurality of expert models.

8. The training method of claim 7, wherein the gate model (40) is configured to establish a correspondence between the respective scores and a representation of the signal.

9. The training method of any of claims 6 to 8, wherein the training signal is labeled with an anomaly class and the updating updates at least one of the expert models that is associated with said anomaly class, and optionally wherein the updating updates the gate model (40).

10. The training method of any of claims 1 to 9, wherein the updating is further based on a top-k loss term taking into account the k most anomalous elements according to the predicted element-wise anomaly score.

11. The training method of any of claims 1 to 10, wherein the signal (22) comprises a plurality of images, a video, a sound, an electrical signal or a combination thereof.

12. The training method of any of claims 1 to 11, further comprising an initial training stage in which the machine learning model is updated based on another criterion than the difference between the predicted element-wise anomaly score (10) and the pseudo-ground-truth element-wise anomaly score.

13. A method for detecting anomalies in a signal (22) having a succession of elements over a temporal dimension, the method comprising using a machine learning model trained by the training method according to any of claims 1 to 12.

14. A computer program set including instructions for executing the steps of the method of any one of claims 1 to 13 when said program set is executed by at least one computer.

15. A recording medium readable by at least one computer and having recorded thereon at least one computer program including instructions for executing the steps of the method of any one of claims 1 to 13.

## Amended claims

### Amended claims in accordance with Rule 137(2) EPC.

1. A computer-implemented training method for a machine learning model configured to detect anomalies in a signal (22) having a succession of elements over a temporal dimension, the method comprising:
- predicting an element-wise anomaly score (10) for a training signal by using the machine learning model;
- detecting peaks of the element-wise anomaly score over the temporal dimension;
- modelling the detected peaks by one or more probability distributions (18);
- generating a pseudo-ground-truth element-wise anomaly score of the training signal based on the one or more probability distributions (18);
- updating the machine learning model based on a difference between the predicted element-wise anomaly score (10) and the pseudo-ground-truth element-wise anomaly score.

2. The training method of claim 1, wherein the machine learning model comprises a feature extractor (24) configured to process the signal (22) before predicting the element-wise anomaly score (10).

3. The training method of claim 1 or 2, wherein the machine learning model comprises a task encoder (26) configured to process the signal (22) before predicting the element-wise anomaly score (10).

4. The training method of any of claims 1 to 3, wherein the one or more probability distributions (18) comprise respective probability distributions associated with respective one of the peaks, optionally wherein each of the respective probability distributions is sized in consideration of the associated peak.

5. The training method of any of claims 1 to 4, wherein the one or more probability distributions (18) are one or more Gaussian probability distributions.

6. The training method of any of claims 1 to 5, wherein the machine learning model comprises a plurality of expert models.

7. The training method of claim 6, wherein the machine learning model comprises a gate model (40) configured to predict the element-wise anomaly score (10) based on respective scores output by the plurality of expert models.

8. The training method of claim 7, wherein the gate model (40) is configured to establish a correspondence between the respective scores and a representation of the signal.

9. The training method of any of claims 6 to 8, wherein the training signal is labeled with an anomaly class and the updating updates at least one of the expert models that is associated with said anomaly class, and optionally wherein the updating updates the gate model (40).

10. The training method of any of claims 1 to 9, wherein the updating is further based on a top-k loss term taking into account the k most anomalous elements according to the predicted element-wise anomaly score.

11. The training method of any of claims 1 to 10, wherein the signal (22) comprises a plurality of images, a video, a sound, an electrical signal or a combination thereof.

12. The training method of any of claims 1 to 11, further comprising an initial training stage in which the machine learning model is updated based on another criterion than the difference between the predicted element-wise anomaly score (10) and the pseudo-ground-truth element-wise anomaly score.

13. A method for detecting anomalies in a signal (22) having a succession of elements over a temporal dimension, the method comprising using a machine learning model trained by the training method according to any of claims 1 to 12.

14. A computer program set including instructions for executing the steps of the method of any one of claims 1 to 13 when said program set is executed by at least one computer.

15. A recording medium readable by at least one computer and having recorded thereon at least one computer program including instructions for executing the steps of the method of any one of claims 1 to 13.
